Europäisches Patentamt

European Patent Office

Office européen des brevets

(19)

(11) **EP 1 090 219 B1**

(12) **FASCICULE DE BREVET EUROPEEN**

(45) Date de publication et mention
de la délivrance du brevet:
**10.08.2005 Bulletin 2005/32**

(21) Numéro de dépôt: **00922714.1**

(22) Date de dépôt: **21.04.2000**

(51) Int Cl.$^7$: **F02D 19/02**, F02P 5/145

(86) Numéro de dépôt international:
**PCT/FR2000/001061**

(87) Numéro de publication internationale:
**WO 2000/065215 (02.11.2000 Gazette 2000/44)**

(54) **METHODE DE CORRECTION A L'AVANCE A L'ALLUMAGE D'UN MOTEUR A COMBUSTION INTERNE**

VERFAHREN ZUR KORREKTUR DER ZÜNDZEITEINSTELLUNG EINER
BRENNKRAFTMASCHINE

METHOD FOR CORRECTING IGNITION ADVANCE OF AN INTERNAL COMBUSTION ENGINE

(84) Etats contractants désignés:
**FR IT NL**

(30) Priorité: **21.04.1999 FR 9905075**
**14.02.2000 FR 0001794**

(43) Date de publication de la demande:
**11.04.2001 Bulletin 2001/15**

(73) Titulaire: **Institut Français du Pétrole**
**92852 Rueil-Malmaison Cedex (FR)**

(72) Inventeurs:
• **TILAGONE, Richard**
  **F-69003 Lyon (FR)**
• **MONNIER, Gaétan**
  **F-78955 Carrières Sous Poissy (FR)**

(56) Documents cités:
**DE-A- 3 918 683        US-A- 5 036 669**
**US-A- 5 168 853        US-A- 5 333 591**
**US-A- 5 697 346        US-A- 5 809 967**

**Description**

La présente invention concerne le domaine des moteurs à allumage commandé alimentés au gaz naturel ou à d'autre gaz carburant.

Un problème inhérent à ce type de moteurs réside dans la diversité des gaz naturels disponibles sur les réseaux commerciaux. En effet d'importantes variations dans la composition des gaz commercialisés ont été constatées. Ces gaz peuvent soit correspondre au gaz d'origine, soit être constitués d'un mélange de gaz identifiés et connus.

De ce fait, bien que la composition des gaz disponibles sur réseau respecte nécessairement les normes des pays où ils sont commercialisés, des différences importantes existent cependant entre deux points de distribution à l'intérieur d'un même pays ; des différences existent aussi entre les distributions de pays différents.

Par ailleurs la composition du gaz délivré par une même station peut varier selon la période de l'année ; ceci est dû aux variations d'approvisionnement des stations.

Les véhicules fonctionnant au gaz naturel (GN) doivent cependant pouvoir s'alimenter n'importe où et n'importe quand sans avoir de problème de fonctionnement de leur moteur.

Ces problèmes sont déjà évoqués, par exemple dans le brevet US 5 537 854 qui décrit un ensemble piézo-électrique permettant de relier le phénomène de cliquetis aux propriétés acoustiques du carburant (GN).

Il s'avère donc nécessaire de connaître et/ou d'estimer la composition du gaz naturel qui alimente un moteur donné car celle-ci influence le fonctionnement du moteur notamment vis-à-vis du cliquetis.

On sait en effet que le cliquetis est corrélé à l'indice de méthane du gaz, dépendant lui-même de la composition du gaz, qui influe directement sur l'apparition du cliquetis. De la sorte, si l'on connaît avec suffisamment de précision l'indice de méthane d'un gaz naturel, il sera possible à partir notamment des cartographies moteur, de déduire une valeur corrective de l'avance à l'allumage permettant d'appliquer l'avance à l'allumage optimale pour éviter le phénomène de cliquetis ou bien pour caler la combustion d'une façon optimale.

Ainsi, un réglage moteur approprié pourra être trouvé .

La caractérisation du gaz naturel a déjà fait l'objet de nombreuses recherches ; des systèmes d'analyse plus ou moins complexes ont été décrits comme par exemple dans le brevet US 5 333 591 ou US 5 809 967. Selon cet art antérieur, un ensemble d'analyse ou de détermination de la composition du gaz naturel, associé à une unité de contrôle, permet le réglage du moteur.

Il est aussi possible d'avoir recours à une analyse chromatographique pour la détermination de la composition du gaz naturel. Cependant cette solution est coûteuse, d'application peu simple dans un environnement mobile et restreint.

La présente invention vise à assurer un fonctionnement moteur optimal vis-à-vis de l'avance à l'allumage, sans risque de cliquetis. Il s'agit selon l'invention d'améliorer la combustion en garantissant notamment une vitesse de combustion optimale. L'apparition du cliquetis est avantageusement évitée grâce à une diminution de l'avance à l'allumage dès que nécessaire. Par ailleurs la présente invention permet de régler l'avance à l'allumage sans nécessité de fonctionnement du moteur dans les zones de cliquetis notamment de cliquetis naissant.

La présente invention propose une méthode de correction de l'avance à l'allumage d'un moteur à combustion interne en fonction de la variation de la composition d'un gaz carburant, notamment du gaz naturel, contenu dans un réservoir et alimentant ledit moteur, méthode selon laquelle on détermine la variation d'une grandeur liée au débit du gaz nécessaire pour atteindre au moins un point de fonctionnement de référence du moteur à la suite de la variation de composition de ce gaz, on détermine, à partir de cette variation de grandeur, une valeur de correction de l'avance à l'allumage, puis on corrige l'avance à l'allumage, caractérisé en ce que

a) on calcule à partir de la variation de débit du gaz un indice de méthane relatif au gaz remplissant ledit réservoir,

b) on déduit dudit indice une valeur de correction de l'avance à l'allumage.

Une méthode selon l'invention, peut consister à calculer un indice de méthane relatif au gaz naturel remplissant ledit réservoir puis à corréler ledit indice avec une valeur de correction de l'avance à l'allumage grâce à une table de correspondance prédéfinie, ou bien à appliquer une correction donnée si l'indice calculé est inférieur à une valeur prédéfinie.

Un rapport R débit air/débit carburant pour des conditions de combustion stoechiométriques peut être fonction de la composition du gaz naturel dans le réservoir du véhicule. Il a été trouvé dans le cadre de la présente invention qu'il était possible d'établir une corrélation entre ce rapport et l'indice de méthane précédemment décrit.

De plus, le contrôle moteur pourra quantifier en permanence selon la présente invention l'effet d'une variation du rapport R à la suite d'une variation de la composition du gaz naturel dans le réservoir du véhicule.

Ainsi, un réglage moteur approprié pourra être trouvé si on connaît en permanence le rapport air /carburant stoechiométrique du gaz naturel contenu dans le réservoir.

De façon spécifique, l'indice de méthane peut être donc calculé en fonction du rapport débit air/débit carburant pour une combustion stoechiométrique.

Comme il a déjà été souligné, le rapport est fonction de la composition chimique du gaz et est donc susceptible de changer en fonction d'un plein de réservoir à un autre. De manière plus générale, ce rapport changera dès que la composition du gaz contenu dans le réservoir changera, c'est-à-dire dès lors que le carburant injecté dans le réservoir aura une composition différente de celui précédemment présent dans le réservoir.

Plus précisément, le rapport peut être déterminé avant et après un remplissage du réservoir, et l'on peut déterminer en outre un débit de gaz avant et un débit de gaz après remplissage du réservoir, pour un même point de fonctionnement du moteur.

Le rapport se rapportant au plein précédent et le débit sont connus car enregistrés à tout moment en mémoire du calculateur. Des variations significatives dans les compositions de gaz entre deux pleins successifs correspondront donc à des variations notoires entre les débits de gaz avant et (Q(1)) et (Q(2)) donc entre les rapports (R(1)) et (R(2)). Pour un même point de fonctionnement de référence du moteur (richesse de consigne constante et régime moteur constant), il a été trouvé que le rapport Q air/Q carburant(gaz) stoechiométrique correspondant au gaz contenu dans le réservoir est inversement proportionnel au débit de ce même gaz .

Il est donc possible de calculer le rapport après remplissage à partir de la différence de l'inverse des débits (1/Q(2))-(1/Q(1)) multipliée par une première constante K1, valeur à laquelle on ajoute le rapport avant remplissage, c'est-à-dire déterminé pour le plein précédent.

En outre, il a été trouvé dans la présente invention qu'il était possible de déterminer de façon étonnamment simple l'indice de méthane du gaz contenu dans le réservoir en multipliant le rapport R(2) par une deuxième constante K2 et en ôtant une troisième constante K3 dudit produit.

Les valeurs K2 et K3 pourront, par exemple, être déterminées en fonction de la nature de l'ensemble des gaz susceptibles d'être utilisés dans un lieu ou dans un pays donné.

D'autres caractéristiques, détails, avantages de la présente invention apparaîtront mieux à la lecture de la description qui va suivre, faite à titre illustratif et nullement limitatif en référence aux dessins annexés sur lesquels :

- La figure 1 est un schéma d'organisation de la méthode selon l'invention;
- La figure 2 donne la situation de différents gaz, par leur rapport R en fonction de l'indice de méthane calculé IM.

L'organisation décrite ci-après permet d'obtenir un facteur de correction C de l'avance à l'allumage, qui permet d'assurer un fonctionnement optimal du moteur, sans cliquetis, quelle que soit la composition du gaz qui alimente le moteur.

On sait que le très bon comportement du gaz naturel vis-à-vis du cliquetis contribue à atteindre un réglage moteur optimal. Le paramètre physico-chimique qui traduit cette aptitude est l'indice de méthane IM qui dépend de la composition du gaz.

Cet indice de méthane peut être estimé à partir d'une corrélation expérimentale sur un ensemble de gaz de référence, en prenant en compte les espèces chimiques les plus influentes.

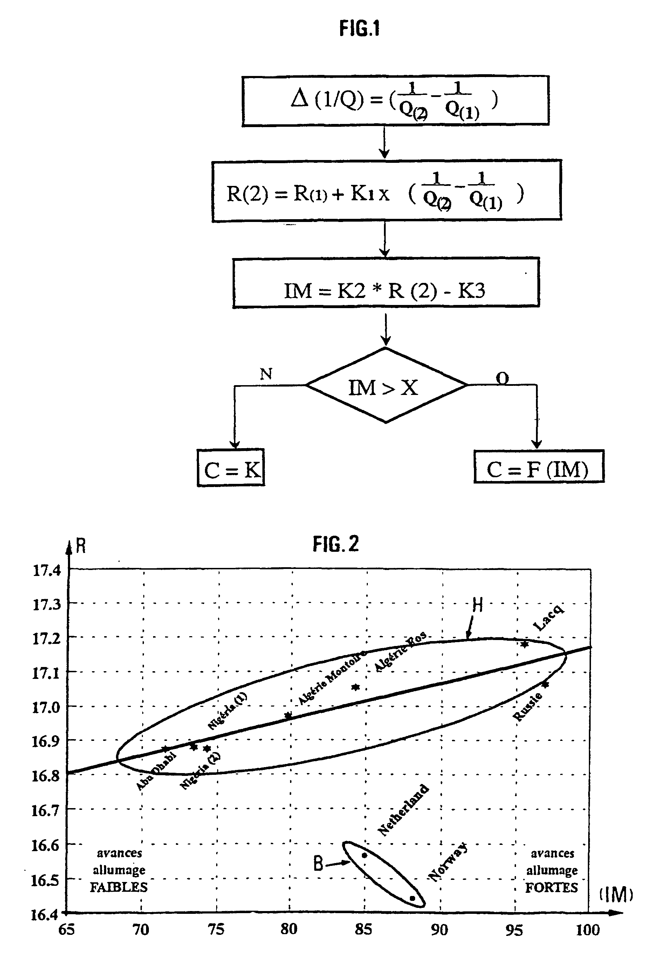

La méthode selon l'invention comprend un calcul particulier de l'indice de méthane IM tel qu'il sera explicité ci-après en relation avec la figure 1.

Le calcul peut être initié à partir de valeurs connues R(0), Q(0) définies comme standard pour chaque point de fonctionnement du moteur ou point de référence. De manière classique un point de fonctionnement moteur peut être défini par le régime de rotation du moteur et par la charge du moteur. Cette charge peut être notamment définie par la .pression régnant dans le collecteur d'admission, par la position papillon...

Suite à un remplissage du véhicule en gaz naturel, la composition du gaz contenu dans le réservoir a probablement varié, pour les raisons explicitées ci-dessus.

Lors de l'utilisation ultérieur du véhicule, le calculateur mémorise le nouveau débit de gaz nécessaire pour atteindre le point de fonctionnement de référence et satisfaire la richesse de fonctionnement de consigne.

Il est en effet nécessaire de faire varier le débit de gaz afin d'atteindre ladite richesse de consigne sur ce point de fonctionnement de référence. Cette variation du débit entraîne une variation du rapport (R) air/carburant pour les conditions stoechiométriques. Suivant la présente invention, et pour un même point de fonctionnement du moteur, on a :

$$R(1) = K1/[Q(1)] \text{ et } R(2) = K1/[Q(2)]$$

Q(2) et Q(1) peuvent être déterminés par mesure
K1 étant une constante donnée, connue
R(1) étant le rapport mémorisé avant le remplissage ;

on en déduit R(2) qui est, le rapport final, après remplissage :

$$R(2) = R(1) + K1 \times \left( \frac{1}{Q(2)} - \frac{1}{Q(1)} \right)$$

Puis on détermine l'indice de méthane IM du gaz contenu dans le réservoir par la formule suivante IM = K2*R(2) - K3.

Une valeur corrective de l'avance à l'allumage est ainsi appliquée suivant la valeur de l'indice de méthane IM calculé.

A titre illustratif, la droite illustrée selon la figure 2 a été obtenue avec K2 = 95 et K3 = 1535.

Il apparaît que les gaz types "H" restent dans un "nuage" autour de ladite droite et donc qu'une bonne corrélation existe.

Cependant pour certains gaz tels que ceux de Hollande ou de Norvège, gaz de type "B", l'indice de méthane calculé est très éloigné de la courbe. Un traitement spécifique est donc appliqué si la valeur IM calculée est inférieure ou égale à une certaine valeur X prédéfinie.

L'application de la formule de corrélation donnée ci-dessus donnerait un indice IM très faible, de l'ordre de 35, de sorte que la réduction d'avance correspondante serait inadaptée pour le moteur. De plus, il a été établi, au cours d'essais, que plus le taux d'inertes dans le gaz naturel est important, plus les vitesses de combustion sont faibles, toutes choses égales par ailleurs. Pour ces gaz, l'action corrective appropriée est donc d'augmenter les avances à l'allumage afin de limiter le décalage des combustions dans le cycle, et non pas de la diminuer. Une correction forfaitaire (C = K) est appliquée dans ces cas.

Pour les autres gaz, pour lesquels l'indice IM est supérieur à ladite valeur X, on appliquera une correction C selon une table de correspondance C = f(IM) appartenant aux cartographies moteur.

D'une façon générale, de faibles avances à l'allumage seront appliquées pour de faibles indices IM et inversement.

La valeur X a été choisie égale à 60 dans les essais réalisés par le demandeur. Cette valeur est purement illustrative et nullement limitative.

On décrit ci-après un mode particulier de mise en oeuvre de la méthode selon l'invention.

1) Attendre que le moteur soit sur le point de fonctionnement de référence ;
Remarques :

a- le point de référence est le point de fonctionnement moteur sur lequel va être appliquée la stratégie décrite ;

b- le point de référence est parfaitement défini et sans ambiguïté par le débit d'air massique (Qair) et le régime moteur ;

c- on peut parfaitement envisager plusieurs points de référence pour procéder par exemple à des recoupements suivant des stratégies à définir. Par contre, un point de référence doit être choisi en fonction du niveau de répétabilité possible à atteindre pour garantir la fiabilité de cette stratégie (attention donc aux fonctionnements débouclés en richesse.

2) La détermination par mesure du régime de rotation (capteur régime sur couronne dentée) et de la charge (pression collecteur, position papillon,...) se fait systématiquement sur les moteurs courant, et donc est en permanence disponible ;

3) détermination du débit d'air du point de référence, par calcul (on connaît la cylindrée, le régime, le remplissage en fonction de la charge, les conditions thermodynamiques à l'admission), ou par lecture sur cartographie si disponible.

4) A partir de la formule de richesse, sur le même point de référence, on a

Qgaz*RAFST = Qair*richesse=cte

Dans cet exemple, RAFST étant le rapport massique Air/Fuel stoechiométrique et IMIFP étant l'indice de méthane calculé.

Mémorisation des conditions initiales [1] :

Avant le remplissage du réservoir, [1], le calculateur a enregistré en mémoire Qgaz[1] et RAFST[1]

Détermination de Qgaz[2] : après remplissage :

Pour atteindre la richesse de consigne, le contrôle moteur va ajuster le temps d'injection Ti[2], à partir duquel il est possible de connaître Qgaz[2]

Test :

Si Qgaz[2] -Qgaz[1] < epsilon, nombre petit à définir, alors ne rien faire, sinon, continuer.

Détermination de RAFST[2] :

RAFST[1] * Qgaz[1] = RAFST[2] * Qgaz[2]
RAFST[2] = RAFST[1] * Qgaz[1]/ Qgaz[2]

Détermination de IMIFP[2] :

On a établit, pour un pool de gaz naturel choisi comme référence, la relation :

IMIFP = K2 * RAFST +K3
IMIFP[2] = K2 * RAFST[2] + K3

Test :

| Si IMIFP[2] calculé > 60 (gaz « H ») Application de la correction d'avance (correction : f(IMIFP) à définir | Si IMIFP[2] calculé < 60 (gaz « B ») Application de la correction d'avance pour gaz B avec indice de méthane réel - 85 |
|---|---|

La correction de l'avance est réglée en fonction de IMIFP. Ces corrections en fonction de IMIFP peuvent avoir été prédéterminées par des essais lors de la mise au point du moteur.

Selon l'invention il est possible d'utiliser un ou plusieurs points de référence.

Le choix du point de référence sera fait de préférence dans une zone de fonctionnement fréquent du moteur par exemple au ralenti. Le ralenti présente par ailleurs l'avantage d'avoir des débits d'air bien calibrés, ce qui facilitera la détermination des différentes valeurs nécessaires à la mise en oeuvre de l'invention.

Il est possible selon la méthode proposée de mesurer les variations de carburant entre deux pleins mais cela est également possible par rapport à des caractéristiques d'un carburant initial. De même la mise en oeuvre de la méthode selon l'invention peut être réalisée en continu ou de façon intermittente sans pour autant attendre un nouveau remplissage du réservoir.

**Revendications**

**1.** Méthode de correction de l'avance à l'allumage d'un moteur à combustion interne en fonction de la variation de la composition d'un gaz carburant, notamment du gaz naturel, contenu dans un réservoir et alimentant ledit moteur, méthode selon laquelle on détermine la variation d'une grandeur liée au débit du gaz nécessaire pour atteindre au moins un point de fonctionnement de référence du moteur à la suite de la variation de composition de ce gaz, on détermine, à partir de cette variation de grandeur, une valeur de correction de l'avance à l'allumage, puis on corrige l'avance à l'allumage, **caractérisé en ce que**

a) on calcule à partir de la variation de débit du gaz un indice de méthane (IM) relatif au gaz remplissant ledit réservoir,

b) on déduit dudit indice (IM) une valeur de correction de l'avance à l'allumage.

2. Méthode selon la revendication 1, **caractérisé en ce que** l'indice de méthane (IM) est calculé en fonction du rapport débit air/débit gaz carburant (R) pour une combustion stoechiométrique.

3. Méthode selon la revendication 2, **caractérisé en ce que** le rapport (R) est déterminé avant (R(1)) et après (R(2)) un remplissage du réservoir, et **en ce que** l'on détermine en outre un débit de gaz avant (Q(1))et un débit de gaz après (Q(2)) remplissage du réservoir, pour un même point de fonctionnement du moteur.

4. Méthode selon la revendication 3, **caractérisé en ce que** l'on calcule le rapport après remplissage (R(2)) à partir de la différence de l'inverse des débits (1/Q(2)-1/Q(1)) multipliée par une première constante K1, valeur à laquelle on ajoute le rapport avant remplissage(R(1)), c'est-à-dire déterminé pour le plein précédent.

5. Méthode selon la revendication 4, **caractérisé en ce que** l'on détermine l'indice de méthane (IM) en multipliant le rapport (R(2)) par une deuxième constante K2 et en ôtant une troisième constante K3 dudit produit.

6. Méthode selon la revendication 5, **caractérisé en ce que** lesdites valeurs K2 et K3 sont déterminées en fonction de la nature de l'ensemble des gaz susceptibles d'être utilisés dans un lieu ou dans un pays donné.

7. Méthode selon l'une des revendications précédentes, **caractérisé en ce que** ledit point de fonctionnement de référence du moteur correspond à un point de fonctionnement du moteur au ralenti.

8. Méthode selon l'une des revendications précédentes, **caractérisé en ce qu'**il comporte plusieurs points de fonctionnement de référence du moteur.

**Patentansprüche**

1. Verfahren zur Korrektur der Zündvorstellung eines Verbrennungsmotors in Abhängigkeit der Variation der Zusammensetzung eines Treibstoffgases, insbesondere Erdgas, das in einem Tank enthalten ist und den Motor versorgt, gemäß welchem Verfahren man die Variation einer Größe bestimmt, die mit dem Gasdurchsatz verbunden ist, der zum Erreichen wenigstens eines Referenzbetriebspunktes des Motors in Folge der Zusammensetzungsvariation dieses Gases verbunden ist, man aus dieser Größenvariation einen Korrekturwert der Zündvorstellung bestimmt und dann die Zündvorstellung korrigiert, **dadurch gekennzeichnet, dass**

   a) man aus der Durchsatzvariation des Gases einen Methanindex (IM) bezüglich des den Tank füllenden Gases berechnet,

   b) man von dem Index (IM) einen Korrekturwert der Zündvorstellung ableitet.

2. Verfahren nach Anspruch 1, **dadurch gekennzeichnet, dass** der Methanindex (IM) in Abhängigkeit des Luftdurchsatz/Treibstoffgasdurchsatz-Verhältnisses (R) für eine stöchiometrische Verbrennung berechnet wird.

3. Verfahren nach Anspruch 2, **dadurch gekennzeichnet , dass** das Verhältnis (R) vor (R(1)) und nach (R(2)) einer Tankbefüllung bestimmt wird und dass man außerdem einen Gasdurchsatz von (Q(1)) und einem Gasdurchsatz nach Tankbefüllung (Q(2)) für einen selben Betriebspunkt des Motors bestimmt.

4. Verfahren nach Anspruch 3, **dadurch gekennzeichnet, dass** man das Verhältnis nach Befüllung (R(2)) aus der Differenz des Inversen der Durchsätze (1/Q(2)- 1/Q(1)) multipliziert durch eine erste Konstante K1 berechnet, bei welchem Wert man das Verhältnis vor Befüllung (R(1)) hinzufügt, das heißt bestimmt für die vorhergehende Füllung.

5. Verfahren nach Anspruch 4, **dadurch gekennzeichnet, dass** man den Methanindex (IM) bestimmt unter Multiplizieren des Verhältnisses (R(2)) durch eine zweite Konstante K2 und unter wegnehmen einer dritten Konstante K3 des Produkts.

6. Verfahren nach Anspruch 5, **dadurch gekennzeichnet, dass** die Werte K2 und K3 in Abhängigkeit der Natur der Gesamtheit der Gase bestimmt werden, die geeignet sind, in einem vorgegebenen Ort oder Land verwendet zu werden.

7.  Verfahren nach einem der vorhergehenden Ansprüche, **dadurch gekennzeichnet, dass** der Referenzbetriebspunkt des Motors einem Punkt verlangsamten Motorbetriebs entspricht.

8.  Verfahren nach einem der vorhergehenden Ansprüche, **dadurch gekennzeichnet, dass** es mehrere Referenzbetriebspunkte des Motors umfasst.

## Claims

1.  Method for correction of the ignition advance of an internal combustion engine as a function of the variation in composition of a fuel gas, in particular natural gas, contained in a tank and supplying the said engine, in accordance with which method the variation is determined of a magnitude linked to the flow-rate of the gas required to attain at least one reference operating point of the engine following a variation in the composition of this gas, from this variation in magnitude is determined a correction value of the ignition advance, and then the ignition advance is corrected, *characterised by* the fact that:

    a) from the variation in the flow-rate of the gas a methane index (MI) relative to the gas filling the said tank is determined,

    b) from the said index (MI) a correction value of the ignition advance is deduced.

2.  Method as described in claim 1, *characterised by* the fact that the methane index (MI) is calculated as a function of the air flow-rate/fuel gas flow-rate ratio (R) for stoichiometric combustion.

3.  Method as described in claim 2, *characterised by* the fact that the ratio (R) is determined before ((R(1)) and after (R(2)) filling of the tank, and by the fact that a gas flow-rate before (Q(1)) and a gas flow-rate after (Q(2)) filling of the tank is also determined for a same operating point of the engine.

4.  Method as described in claim 3, *characterised by* the fact that the ratio after filling (R(2)) is calculated from the difference of the reciprocals of the flow-rates (1/Q(2)-1/Q(1)) multiplied by a first constant K1, to which value is added the ratio before filling (R(1)), i.e. determined for the preceding fill.

5.  Method as described in claim 4, *characterised by* the fact that the methane index (MI) is determined by multiplying the ratio (R(2)) by a second constant K2 and by subtracting a third constant K3 from the said product.

6.  Method as described in claim 5, *characterised by* the fact that the said values K2 and K3 are determined as a function of the nature of the set of gasses which may be used in a given place or country.

7.  Method as described in one of the preceding claims, *characterised by* the fact that the said reference operating point of the engine corresponds to an operating point of the engine during idling.

8.  Method as described in one of the preceding claims, *characterised by* the fact that it includes a plurality of reference operating points of the engine.

## FIG.1

$$\Delta\,(1/Q) = \left(\frac{1}{Q_{(2)}} - \frac{1}{Q_{(1)}}\right)$$

$$R(2) = R_{(1)} + K_1 \times \left(\frac{1}{Q_{(2)}} - \frac{1}{Q_{(1)}}\right)$$

$$IM = K2 * R\,(2) - K3$$

$$IM > X$$

N — C = K

O — C = F (IM)

FIG. 2